# EUROPEAN PATENT SPECIFICATION

(11) **EP 2 362 587 B1**
(45) Date of publication and mention of the grant of the patent: **05.06.2013**
(21) Application number: 08878364.2
(22) Date of filing: 19.12.2008
(51) Int. Cl.: H04L 29/12

(54) **Method and apparatus for realizing ARP request broadcasting limitation**
Verfahren und Vorrichtung zum Realisieren einer ARP-Anforderungs-verbreitungsbegrenzung
Procédé et appareil pour réaliser une limitation de diffusion de demandes ARP

(30) Priority: 25.11.2008 CN 200810179016
(43) Date of publication of application: 31.08.2011
(73) Proprietor: ZTE Corporation, Shenzhen, Guangdong 518057 (CN)
(72) Inventor: NI, Shenliu, Shenzhen Guangdong 518057 (CN)
(74) Representative: Bokinge, Ole
(86) International application number: PCT/CN2008/073604
(87) International publication number: WO 2010/060246

(56) References cited:
- EP-A1- 1 868 354
- EP-A2- 1 613 023
- WO-A1-03/067824
- WO-A2-02/076017
- CN-A- 1 925 493
- CN-A- 101 094 235
- KR-A- 20030 072 032
- US-A1- 2004 071 164
- DROMS R: "Dynamic Host Configuration Protocol; rfc2131.txt", 19970301, 1 March 1997 (1997-03-01), XP015007915, ISSN: 0000-0003

## Description

### Technical Field

The present invention relates to the field of communication technology, and more especially, to a method and apparatus for implementing Address Resolution Protocol (ARP) broadcasting limitation.

### Background of the Related Art

With the rapid development of the broadband access technology and broadband services, the network security is more and more concerned. The existing networks, however, may be attacked by various viruses and hackers. IP address cheating is one of the most common attacking means by hackers. For example, hacker machine A pretends to be host B to actively request communication with host C. Hacker machine A can also pretend to be host B to passively respond to the communication request from host C. In a network communication technology based on TCP/IP (Transmission Control Protocol/Internet Protocol), the main purpose of ARP is to implement address resolution, i.e. to acquire the corresponding relationship between the IP address and the MAC (Media Access Control) address. Its request message is broadcasted in two layers of VLAN domains, thus it provides convenience for the hacker attack of IP address cheating.

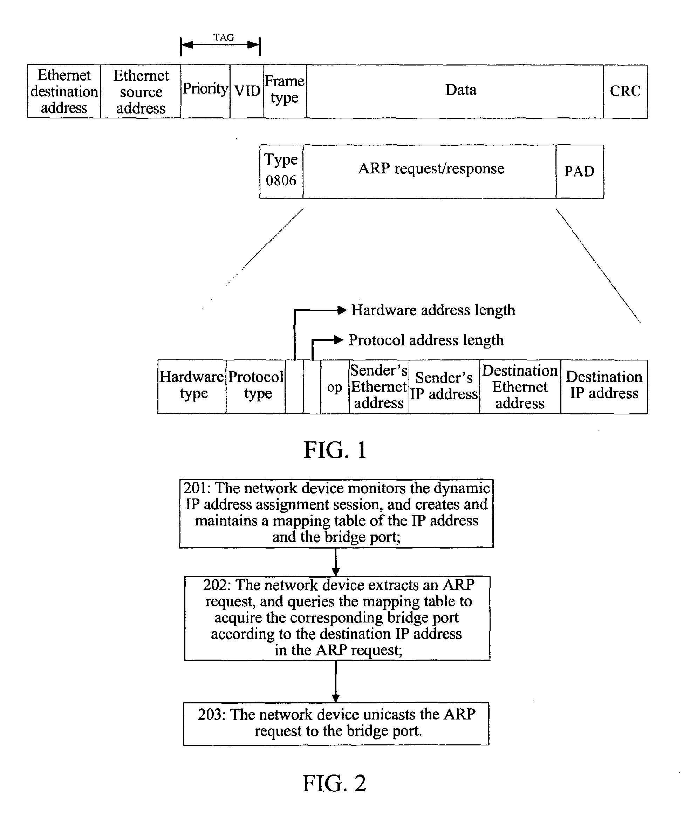

The format of the ARP request or response packet is shown in FIG. 1. The hacker machine can easily acquire the IP address of the destination host and can pretend to be the destination host to respond to the requester. If the hacker machine acquires the sender's IP and the destination IP, it can also actively attack them. Therefore, IP address also becomes the object of protection in the network.

In the existing broadband access network, there are mainly three access methods: fixed IP, DHCP (Dynamic Host Configuration Protocol) and PPPoE (Point-to-Point Protocol over Ethernet), wherein the DHCP and PPPoE are two access methods in which IP addresses are dynamically assigned. With the development of network technology, the number of broadband users grows exponentially. Therefore, the available IP addresses for the broadband users are becoming less and less. Thus, the access methods in which the IP addresses are dynamically assigned are widely used in the existing broadband access.

The document WO 02/076017 A2 discloses an access network which is built using Ethernet or IEEE 802.3 technology. The network comprises a plurality of terminals, a hierarchy of concentrator stages and a DHCP server. On startup of the terminals, DHCP discover messages are sent to the server which include the terminals' MAC addresses. These addresses are cached at the concentrators against the ports on which they are received. Thus unknown MAC addresses are only sent upstream. To avoid the network being flooded with broadcast messages any time a client PC uses ARP to find the MAC address of any other client, the central server provides a proxy ARP function.

### Summary of the Invention

The present invention provides a method and apparatus for implementing ARP request broadcasting limitation to achieve the unicast of the ARP request and effectively prevent attack by hackers, to solve a technical problem.

In order to solve the above technical problem, the present invention provides a method for implementing the ARP broadcasting limitation, and said method comprises:
(a) a network device creating and maintaining a mapping table of an IP address and a bridge port according to a dynamic IP address assignment related message and information of the bridge port into which a dynamic IP address assignment request message enters, said mapping table of the IP address and bridge port comprising several pieces of mapping table records;
(b) said network device extracting an ARP request, and querying said mapping table to acquire the corresponding bridge port according to a destination IP address in said ARP request; and
(c) said network device unicasting said ARP request to said bridge port;
wherein each mapping table record in said mapping table of the IP address and the bridge port comprises a lease period and a time stamp, and said maintenance in step (a)refers to the network device timing and circularly detecting each mapping table record, if the lease period is equal to zero and the difference between the current time and the time stamp is greater than T, or, the lease period does not equal zero but the difference between the current time and the time stamp is greater than the lease period, delete this piece of record, and the value of said T is a time value determined from the time that a session with a normally assigned IP address initiates a request to the time that the session receives a response according to networking scale.

Furthermore, each mapping table record comprises user's MAC address, virtual local area network ID, request forwarding serial number, user IP address, as well as the bridge port.

Furthermore, in step (a), said dynamic IP address assignment related message refers to a DHCP or PPPoE message, and for DHCP mode, if the dynamic IP address assignment related message is DISCOVER, REQUEST, OFFER or ACK message, create or update the mapping table record of mapping relationship between the IP address and the bridge port; if the dynamic IP address assignment related message is RELEASE, DECLINE or NAK message, delete the mapping table record of mapping relationship between the IP address and the bridge port.

Furthermore, in the process of circular detection of the mapping table records, if the number of detected records is greater than the set aging times, then wait for the next detection cycle.

In order to solve the above technical problem, the present invention also provides an apparatus for implementing the ARP broadcasting limitation, and the apparatus comprises a receiving and analyzing module, a mapping table maintenance module, a mapping table query module, and a forwarding module, wherein,
the receiving and analyzing module is used to receive and analyze a ARP request to acquire a destination IP address;
the mapping table maintenance module is used to create and maintain a mapping table of the IP address and the bridge port according to the dynamic IP address assignment related message as well as the information of the bridge port into which the dynamic IP address assignment request message enters, and said mapping table of the IP address and the bridge port comprises several pieces of mapping table records;
the mapping table query module is used to query the mapping table to acquire the bridge port according to the destination IP address acquired by the receiving and analyzing module;
the forwarding module is used to unicast the ARP request received by the receiving and analyzing module to the acquired bridge port;
wherein each mapping table record in the mapping table of the IP address and the bridge port comprises a lease period and a time stamp, and said mapping table maintenance module is also used for timing and circular detection of each record in the mapping table to implement the aging mechanism: if the lease period equals zero and the difference between the current time and the time stamp is greater than T, or the lease period does not equal zero but the difference between the current time and the time stamp is greater than the lease period, delete this record, and the value of said T is a time value determined from the time that a session with a normally assigned IP address initiates a request to the time that the session receives a response according to the networking scale.

Furthermore, said receiving and analyzing module is used to receive and analyze the dynamic IP address assignment related message; said forwarding module is used to forward said dynamic IP address assignment related message; said mapping table maintenance module is used to create, save and maintain the mapping table of the IP address and the bridge port according to the result of analyzing the dynamic IP address assignment related message.

Furthermore, said dynamic IP address assignment related message refers to a DHCP or PPPoE message, and for the DHCP mode, said mapping table maintenance module maintains the mapping table like this: if the dynamic IP address assignment related message is DISCOVER, REQUEST, OFFER or ACK message, create or update the mapping table record of mapping relationship between the IP address and the bridge port; if the dynamic IP address assignment related message is RELEASE, DECLINE or NAK message, delete the mapping table record of mapping relationship between the IP address and the bridge port.

Furthermore, in the process of circular detection of the records in the mapping table, if the number of detected records is greater than the set aging times, wait for the next detection cycle.

Compared to the prior art, the method and apparatus of the present invention create, maintain and query the mapping table of the IP address and the bridge port to implement the unicast of the ARP request based on the dynamic IP address assignment technology, and directly send the ARP request to the host with the destination IP rather than broadcast the request in the VLAN domain, thus effectively prevent attack by hackers.

### Brief Description of Drawings

FIG. 1 is a schematic diagram of the format of an ARP request or response packet in the Ethernet.
FIG. 2 is a schematic diagram of the method for implementing the ARP broadcasting limitation in the present invention.
FIG. 3 is a schematic diagram of the process of creating and maintaining a mapping table of the IP address and the bridge port in the present invention.
FIG. 4 is a schematic diagram of the aging the mapping table of the IP address and bridge port in the present invention.

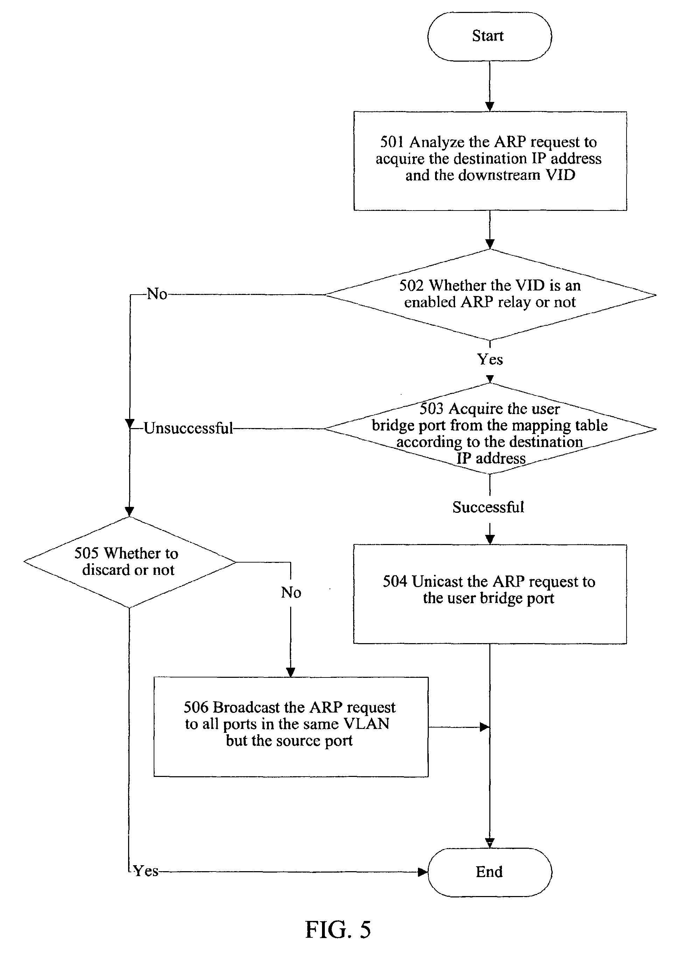

FIG. 5 is a flow chart of processing the ARP request message in the present invention.
FIG. 6 is a schematic diagram of the format of a DHCP request and response.

### Preferred Embodiments of the Present Invention

The method and apparatus of the present invention implement the ARP broadcasting limitation on the basis of the dynamic IP address assignment technology, and directly send the Address Resolution Protocol (ARP) request to the host with the destination IP rather than broadcast the request in the VLAN domain.

As shown in FIG. 2, the method for implementing the ARP broadcasting limitation in the present invention comprises the following steps:
Step 201: the network device monitors the dynamic IP address assignment session, and creates and maintains a mapping table of the IP address and the bridge port according to the dynamic IP address assignment related message and the information of the bridge port into which the dynamic IP address assignment request message enters;
Step 202: the network device extracts an ARP request, and queries the mapping table to acquire the corresponding bridge port according to the destination IP address in the ARP request;
Step 203: the network device unicasts the ARP request to the bridge port rather than broadcasts it in the VLAN domain.

In the following, the DHCP access mode is taken as an example to illustrate the process of the network device creating a mapping table of the IP address and the bridge port by monitoring the dynamic IP address assignment session in a broadband network with DHCP access mode. The mapping table of the IP address and the bridge port comprises several pieces of mapping table records, and each mapping table record comprises user's MAC address (Ethernet source address: chaddr), the VLAN ID (VID, virtual local area network ID), the transaction ID xid (Transaction ID, DHCP request serial number), lease period, time stamp, user IP address, and information of the bridge port.

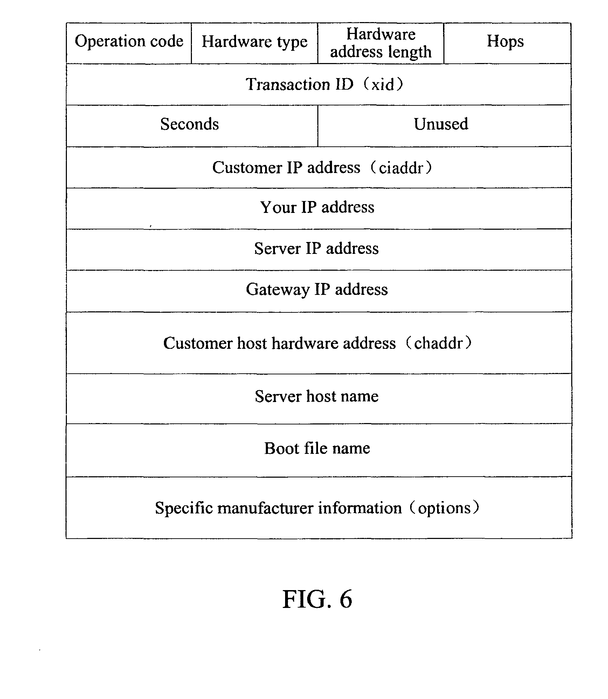

The format of the DHCP request and response is shown in FIG. 6, and especially, the network device extracts the DHCP request message which enters into the bridge port of the device, and acquires the VID from the TAG in the Ethernet header of the message, and acquires the chaddr and xid from the DHCP data, and then records the chaddr, xid and bridge port. The network device extracts the DHCP response message, and acquires the VID from the TAG in the Ethernet header of the message, and acquires chaddr and xid from the DHCP data, and acquires the lease period from the specific manufacturer information, and then updates the user IP address, lease period and time stamp in the record in the mapping table according to the chaddr, VID and xid.

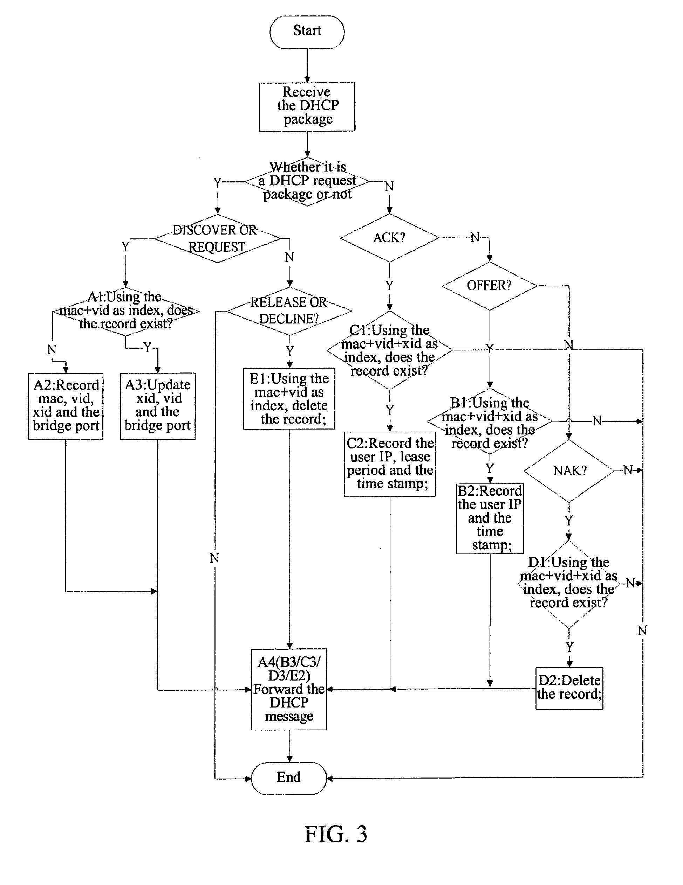

In the following, the process of creating and maintaining the mapping table of the IP address and the bridge port is illustrated in detail by referring to FIG. 3.

As shown in FIG. 3, when the network device receives the DHCP packet, it judges whether the DHCP packet is a DHCP request packet or not, and if yes, further judges if it is a DHCPDISCOVER or DHCPREQUEST message, otherwise it judges whether it is an ACK message or not; with sequential judgments, the type of the DHCP message is acquired.

According to different types of the DHCP message, the network device maintains the mapping table differently, which will be illustrated respectively as follows:

### Type 1: DHCPDISCOVER or DHCPREQUEST message

When the network device receives the DHCPDISCOVER or DHCPREQUEST message sent from the user device, it performs the following steps:
A1: judge whether there is the corresponding record in the mapping table or not according to the MAC address and VID in the message, and execute A2 if no, otherwise execute A3;
A2: create a new record in the mapping table, including the chaddr, user VID, xid, information of the bridge port in the message; and then execute step A4;
A3: update the xid and information of the bridge port in the record, and then execute step A4;
A4: the message is forwarded to the DHCP server.

### Type 2: DHCPOFFER message

The following steps are executed when the DHCPOFFER message sent by the server is received:
B1: judge whether there is the corresponding record in the mapping table or not according to the chaddr, VID and xid in the message, and discard the message if no, and end the process; otherwise execute B2;
B2: record the user IP and the time stamp;
B3: directly forward the message to the bridge port.

### Type 3: DHCPACK message

The following steps are executed when the DHCPACK message sent by the server is received:
C1: judge whether there is the corresponding record in the mapping table or not according to the chaddr, VID and xid in the message, and discard the message if no, and end the process; otherwise execute C2;
C2: update the lease period, time stamp and user IP address in the record;
C3: directly forward the message to the bridge port.

### Type 4: DHCPNAK message

The following steps are executed when the DHCPNAK message sent by the server is received:
D1: judge whether there is the corresponding record in the mapping table or not according to the chaddr, VID and xid in the message, and if yes, execute D2, otherwise discard the message and end the process; ;
D2: delete this request record;
D3: forward the message to the user.

### Type 5: DHCPRELEASE or DHCPDECLINE

The following steps are executed when the DHCPRELEASE or DHCPDECLINE message sent by the user is received:
E1: judge whether there is the corresponding record in the mapping table or not according to the chaddr and VID in the message, and if yes, delete the request record, otherwise discard the message and end the process;
E2: forward the message to the DHCP server.

The DHCP mode is taken as an example to illustrate the creating and maintaining of the mapping table in the above, of course it is also applicable in the access mode of PPPoE in which the IP address is also assigned dynamically.

Specifically, for the DHCP mode, the network device creates or updates the record in the mapping table of mapping relationship between the IP address and the bridge port when receiving the DISCOVER, REQUEST, OFFER or ACK message. It deletes the record in the mapping table of mapping relationship between the IP address and the bridge port when receiving RELEASE, DECLINE or NAK message.

The present invention also provides an aging mechanism for the mapping table of the IP address and the bridge port, and the aging mechanism can clear the corresponding record in the mapping table of mapping relationship between the IP address and the bridge port when the session is abnormal or the message is lost or released, so as to avoid the extra storage space being occupied by useless record.

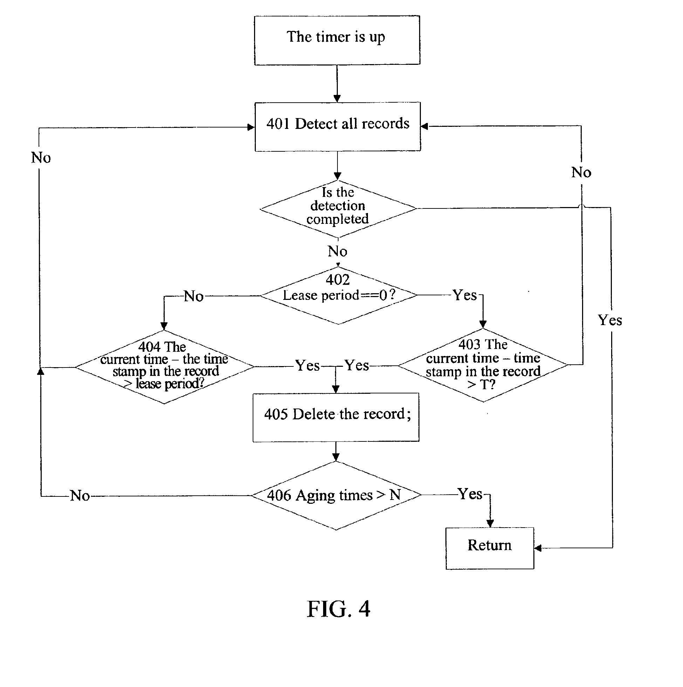

As shown in FIG. 4, in order to implement the aging mechanism, the network device starts up a timer (interval is set as 60 seconds) for timing detection of the mapping table, so as to implement the aging function on the records. The implementation process is as follows:
Step 401: when the timer is up, circularly detect each record in the mapping table until all records are detected;
Step 402: judge whether the lease period of the record equals zero or not, and execute step 403 if yes, otherwise execute step 404;
Step 403: check whether the difference between the current time and the time stamp is greater than T or not, and execute step 405 if yes, otherwise execute step 404;

The value of T is a time value determined from the time that the session with a normally assigned IP address initiates a request to the time that the session receives a response according to the networking scale.

Step 404: check whether the difference between the current time and the time stamp is greater than the lease period, and execute step 405 and delete this record if yes;

Step 405: delete the record for the aging of the intermediate process record due to the DHCP request process not being successfully completed;

Step 406: whether the aging times (the number of detected records) is greater than N or not, and continue with the aging detection of the next record and repeat step 401 if no; otherwise, wait until the timer is up, that is, the next detection cycle begins, and end the process.

N is a set and relatively reasonable aging times, since it is not proper to execute too much activities in one timer period.

After the process of creating the mapping table of the IP address and the bridge port, as shown in FIG. 4, the network device analyzes the received ARP request to acquire the destination IP and VID, and then finds the corresponding bridge port information from the mapping table according to the destination IP, and finally sends the bridge port information to the user port rather than broadcasts it in the VLAN.

In order to improve the function of the network device, the device can be set to support the broadcast limitation or not, that is, whether the device is an enabled ARP relay or not, and the device can also be set to discard the current ARP request or not when the network device cannot implement the unicast.

In the following, the server-side sending the ARP request to the user device is taken as an example to illustrate the specific unicast process, which is as follows:
Step 501: the network device analyzes the ARP request to acquire the destination IP address and the downstream VID;
Step 502: the network device judges whether the VID is an enabled ARP relay or not, and execute step 503 if yes, otherwise execute step 505;
Step 503: acquire the user bridge port from the mapping table according to the destination IP address, and execute step 504 if the acquisition is successful, otherwise execute step 505;
Step 504: unicast the ARP request to the user bridge port rather than broadcast it in the VLAN, and end the process;
Step 505: judge whether the ARP request needs to be discarded or not, and discard the request and end the process if yes; otherwise execute step 506;
Step 506: broadcast the ARP request to all ports in the same VLAN except the source port.

In order to implement the above method for ARP request broadcasting limitation, the present invention also provides an apparatus for implementing the ARP request broadcasting limitation, and the apparatus is implemented in the network device and used to forward the ARP request between the user device and the server, and the apparatus comprises a receiving and analyzing module, a mapping table maintenance module, a mapping table query module and a forwarding module, wherein:
the receiving and analyzing module is used to receive and analyze the ARP request to acquire the destination IP address, and it is also used to receive and analyze the dynamic IP address assignment related message;
the mapping table maintenance module is used to create, save and maintain the mapping table of the IP address and the bridge port according to the dynamic IP address assignment related message as well as the information of the bridge port into which the dynamic IP address assignment request message enters;
the mapping table of the IP address and the bridge port comprises several pieces of mapping table records, and each mapping table record comprises the user MAC address (chaddr, source address in the Ethernet), VLAN ID (VID), request serial number xid (transaction ID), lease period, time stamp, user IP address, and the information of the bridge port.

For the DHCP mode, said mapping table maintenance module maintains the mapping table like this: creating or updating the record in the mapping table of mapping relationship between the IP address and the bridge port if the dynamic IP address assignment related message is DISCOVER, REQUEST, OFFER or ACK message; deleting the record in the mapping table of mapping relationship between the IP address and the bridge port if the dynamic IP address assignment related message is RELEASE, DECLINE or NAK message.

Said mapping table maintenance module is also used for timing and circular detection of each record in the mapping table to implement the aging mechanism: if the lease period equals zero and the difference between the current time and the time stamp is greater than T, or the lease time does not equal zero but the difference between the current time and the time stamp is greater than the lease period, delete this record, and the value of said T is a time value determined from the time that a session with a normally assigned IP address initiates a request to the time that the session receives a response according to the networking scale.

The mapping table query module is used to query the mapping table to acquire the user bridge port according to the destination IP address acquired by the receiving and analyzing module;

The unicast forwarding module is used to forward the dynamic IP address assignment related message and unicast the ARP request received by the receiving and analyzing module to the acquired user bridge port.

The device attribute module is used to save the unicast attribute of the current device such as whether the device supports the broadcasting limitation or not and the information such as whether the ARP request is discarded or not if the unicast cannot be implemented.

### Industrial Applicability

Based on the dynamic IP address assignment technology, the method and apparatus of the present invention implements the unicast of the ARP request by creating, maintaining and querying the mapping table of the IP address and the bridge port, and directly sends the ARP request to the host with the destination IP rather than broadcasts the request in the VLAN domain, thus effectively preventing attack by hackers.

## Claims

1. A method for implementing address resolution protocol, ARP, request broadcasting limitation, said method comprising:
a) a network device creating and maintaining (201) a mapping table of an internet protocol, IP, address and a bridge port according to a dynamic IP address assignment related message and information of the bridge port into which a dynamic IP address assignment request message enters, said mapping table of the IP address and bridge port comprising several pieces of mapping table records;
b) said network device extracting an ARP request and querying (202) said mapping table to acquire the corresponding bridge port according to a destination IP address in said ARP request;
and
c) said network device unicasting (203) said ARP request to said bridge port;
**characterized in that** each mapping table record in said mapping table of the IP address and the bridge port comprises a lease period and a time stamp, and the maintenance in step a) refers to timing and circular detection of each mapping table record by the network device, if the lease period equals zero and the difference between the current time and the time stamp is greater than T, or, the lease period does not equal zero but the difference between the current time and the time stamp is greater than the lease period, delete (405) this piece of record, and a value of said T is a time value determined from a time that a session with a normally assigned IP address initiates a request to a time that the session receives a response according to networking scale.

2. The method of claim 1, wherein: each mapping table record comprises user's media access control, MAC, address, virtual local area network identification, request forwarding serial number, user IP address and the bridge port.

3. The method of claim 1, wherein: in step (a), said dynamic IP address assignment related message refers to a DHCP or PPPoE message, and for DHCP mode, create or update a record in the mapping table of mapping relationship between the IP address and the bridge port if the dynamic IP address assignment related message is DISCOVER, REQUEST, OFFER or ACK message; delete the record in the mapping table of mapping relationship between the IP address and the bridge port if the dynamic IP address assignment related message is RELEASE, DECLINE or NAK message.

4. The method of claim 1, wherein: in a process of circular detection of the mapping table records, if the number of detected records is greater than a set aging times, wait for the next detection cycle.

5. An apparatus for implementing address resolution protocol, ARP, request broadcasting limitation, the apparatus comprising a receiving and analyzing module, a mapping table maintenance module, a mapping table query module, and a forwarding module, wherein,
the receiving and analyzing module is used to receive and analyze an ARP request to acquire a destination internet protocol, IP, address;
the mapping table maintenance module is used to create and maintain (201) a mapping table of an IP address and a bridge port according to a dynamic IP address assignment related message and information of the bridge port into which a dynamic IP address assignment request message enters, and said mapping table of the IP address and the bridge port comprises several pieces of mapping table records;
the mapping table query module is used to query (202) the mapping table to acquire the bridge port according to a destination IP address acquired by the receiving and analyzing module;
the forwarding module is used to unicast (203) the ARP request received by the receiving and analyzing module to the acquired bridge port;
**characterized in that** each mapping table record in the mapping table of the IP address and the bridge port comprises a lease period and a time stamp, and said mapping table maintenance module is also used for timing and circular detection of each record in the mapping table to implement an aging mechanism: if the lease period equals zero and the difference between the current time and the time stamp is greater than T, or the lease time does not equal zero but the difference between the current time and the time stamp is greater than the lease period, delete (406) this record, and a value of said T is a time value determined from a time that a session with a normally assigned IP address initiates a request to a time that the session receives a response according to networking scale.

6. The apparatus of claim 5, wherein: said receiving and analyzing module is also used to receive and analyze the dynamic IP address assignment related message; said forwarding module is also used to forward said dynamic IP address assignment related message; said mapping table maintenance module is used to create and maintain the mapping table of the IP address and the bridge port according to a result of analyzing the dynamic IP address assignment related message.

7. The apparatus of claim 5, wherein: said dynamic IP address assignment related message refers to a DHCP or PPPoE message, and for DHCP mode, said mapping table maintenance module maintains the mapping table like this: if the dynamic IP address assignment related message is DISCOVER, REQUEST, OFFER or ACK message, create or update a record in the mapping table of mapping relationship between the IP address and the bridge port; if the dynamic IP address assignment related message is RELEASE, DECLINE or NAK message, delete the record in the mapping table of mapping relationship between the IP address and the bridge port.

8. The apparatus of claim 5, wherein, in a process of circular detection of the records in the mapping table, if the number of detected records is greater than a set aging times, wait for the next detection cycle.

## Patentansprüche

1. Verfahren zum Implementieren einer Address Resolution Protocol, ARP, - Anforderungsrundsendebegrenzung, wobei das Verfahren Folgendes aufweist:
a) eine Netzwerkvorrichtung, die eine Mapping-Tabelle einer Internet Protocol, IP, - Adresse und eines Brückenports gemäß einer dynamischen IP-Adressenzuweisungs-bezogenen Meldung und Informationen des Brückenports, in den eine dynamische IP-Adressenzuweisungs-Anforderungsmeldung eintritt, erzeugt und verwaltet (201), wobei die Mapping-Tabelle der IP-Adresse und des Brückenports mehrere Teile von Mapping-Tabellen-Datensätzen umfasst;
b) wobei die Netzwerkvorrichtung eine ARP-Anforderung extrahiert und die Mapping-Tabelle abfragt (202), um den entsprechenden Brückenport gemäß einer Ziel-IP-Adresse in der ARP-Anforderung zu erfassen; und
c) wobei die Netzwerkvorrichtung die ARP-Anforderung mittels Unicasting an den Brückenport übermittelt (203);
**dadurch gekennzeichnet, dass** jeder Mapping-Tabellen-Datensatz in der Mapping-Tabelle der IP-Adresse und des Brückenports einen Lease-Zeitraum und einen Zeitstempel aufweist, und dass sich das Verwalten in Schritt a) auf Zeitsteuerung und zirkuläre Detektion jedes Mapping-Tabellen-Datensatzes durch die Netzwerkvorrichtung bezieht, wenn der Lease-Zeitraum gleich null ist und die Differenz zwischen der aktuellen Zeit und dem Zeitstempel größer als T ist, oder wenn der Lease-Zeitraum nicht gleich null ist, aber die Differenz zwischen der aktuellen Zeit und dem Zeitstempel größer als der Lease-Zeitraum ist, dieser Datensatzteil gelöscht wird (405), und ein Wert von T ein Zeitwert ist, der anhand einer Zeit ermittelt wird, die beginnt, wenn eine Sitzung mit einer normal zugewiesenen IP-Adresse eine Anforderung initiiert, und endet, wenn die Sitzung eine Antwort gemäß einem Netzwerkmaßstab empfängt.

2. Verfahren nach Anspruch 1, wobei jeder Mapping-Tabellen-Datensatz die Media Access Control, MAC, - Adresse des Benutzers, eine Virtual Local Area Network-Identifikation, eine Anforderungsweiterleitungs-Seriennummer, die Benutzer-IP-Adresse und den Brückenport umfasst.

3. Verfahren nach Anspruch 1, wobei sich in Schritt (a) die dynamische IP-Adressenzuweisungs-bezogene Meldung auf eine DHCP- oder PPPoE-Meldung bezieht, und für einen DHCP-Modus in der Mapping-Tabelle ein Datensatz der Mapping-Beziehung zwischen der IP-Adresse und dem Brückenport erzeugt oder aktualisiert wird, wenn die dynamische IP-Adressenzuweisungs-bezogene Meldung eine DISCOVER-, REQUEST-, OFFER- oder ACK-Meldung ist, und der Datensatz der Mapping-Beziehung zwischen der IP-Adresse und dem Brückenport in der Mapping-Tabelle gelöscht wird, wenn die dynamische IP-Adressenzuweisungs-bezogene Meldung eine RELEASE-, DECLINE- oder NAK-Meldung ist.

4. Verfahren nach Anspruch 1, wobei in einem Prozess der zirkulären Detektion der Mapping-Tabellen-Datensätze, wenn die Anzahl von detektierten Datensätzen größer ist als die festgelegten Alterungszeiten, auf den nächsten Detektionszyklus gewartet wird.

5. Vorrichtung zum Implementieren einer Address Resolution Protocol, ARP, - Anforderungsrundsendebegrenzung, wobei die Vorrichtung ein Empfangs- und Analysemodul, ein Mapping-Tabellen-Verwaltungsmodul, ein Mapping-Tabellen-Abfragemodul und ein Weiterleitungsmodul aufweist, wobei
das Empfangs- und Analysemodul dafür verwendet wird, eine ARP-Anforderung zu empfangen und zu analysieren, um eine Ziel-Internet Protocol, IP, - Adresse zu erfahren;
das Mapping-Tabellen-Verwaltungsmodul dafür verwendet wird, eine Mapping-Tabelle einer IP-Adresse und eines Brückenports gemäß einer dynamischen IP-Adressenzuweisungs-bezogenen Meldung und Informationen des Brückenports, in den eine dynamische IP-Adressenzuweisungs-Anforderungsmeldung eintritt, zu erzeugen und zu verwalten (201), und die Mapping-Tabelle der IP-Adresse und des Brückenports mehrere Teile von Mapping-Tabellen-Datensätzen umfasst;
das Mapping-Tabellen-Abfragemodul dafür verwendet wird, die Mapping-Tabelle abzufragen (202), um den Brückenport gemäß einer durch das Empfangs- und Analysemodul erfassten Ziel-IP-Adresse zu erfassen;
das Weiterleitungsmodul dafür verwendet wird, die durch das Empfangs- und Analysemodul empfangene ARP-Anforderung mittels Unicasting an den in Erfahrung gebrachten Brückenport zu senden (203);
**dadurch gekennzeichnet, dass** jeder Mapping-Tabellen-Datensatz in der Mapping-Tabelle der IP-Adresse und des Brückenports einen Lease-Zeitraum und einen 2eitstempel aufweist, und dass das Mapping-Tabellen-Verwaltungsmodul auch zur Zeitsteuerung und zirkulären Detektion jedes Datensatzes in der Mapping-Tabelle verwendet wird, um einen Alterungsmechanismus zu implementieren, wenn der Lease-Zeitraum gleich null ist und die Differenz zwischen der aktuellen Zeit und dem Zeitstempel größer als T ist, oder wenn die Lease-Zeit nicht gleich null ist, aber die Differenz zwischen der aktuellen Zeit und dem Zeitstempel größer als der Lease-Zeitraum ist, dieser Datensatz gelöscht wird (405), und ein Wert von T ein Zeitwert ist, der anhand einer Zeit ermittelt wird, die beginnt, wenn eine Sitzung mit einer normal zugewiesenen IP-Adresse eine Anforderung initiiert, und endet, wenn die Sitzung eine Antwort gemäß einem Netzwerkmaßstab empfängt.

6. Vorrichtung nach Anspruch 5, wobei das Empfangs- und Analysemodul auch dafür verwendet wird, die dynamische IP-Adressenzuweisungs-bezogene Meldung zu empfangen und analysieren; das Weiterleitungsmodul auch dafür verwendet wird, die dynamische IP-Adressenzuweisungs-bezogene Meldung weiterzuleiten; und das Mapping-Tabellen-Verwaltungsmodul dafür verwendet wird, die Mapping-Tabelle der IP-Adresse und des Brückenport gemäß einem Ergebnis einer Analyse der dynamischen IP-Adressenzuweisungs-bezogenen Meldung zu erzeugen und zu verwalten.

7. Vorrichtung nach Anspruch 5, wobei sich die dynamische IP-Adressenzuweisungs-bezogene Meldung auf eine DHCP-oder PPPoE-Meldung bezieht, und wobei das Mapping-Tabellen-Verwaltungsmodul die Mapping-Tabelle für den DHCP-Modus folgendermaßen verwaltet: wenn die dynamische IP-Adressenzuweisungs-bezogene Meldung eine DISCOVER-, REQUEST-, OFFER- oder ACK-Meldung ist, Erzeugen oder Aktualisieren eines Datensatzes der Mapping-Beziehung zwischen der IP-Adresse und dem Brückenport in der Mapping-Tabelle; und wenn die dynamische IP-Adressenzuweisungs-bezogene Meldung eine RELEASE-, DECLINE- oder NAK-Meldung ist, Löschen des Datensatzes der Mapping-Beziehung zwischen der IP-Adresse und dem Brückenport in der Mapping-Tabelle.

8. Vorrichtung nach Anspruch 5, wobei in einem Prozess der zirkulären Detektion der Datensätze in der Mapping-Tabelle, wenn die Anzahl der detektierten Datensätze größer als die festgelegten Alterungszeiten ist, auf den nächsten Detektionszyklus gewartet wird.

## Revendications

1. Procédé pour réaliser une limitation de diffusion de demandes de protocole de résolution d'adresses, ARP, ledit procédé comprenant :
a) un dispositif de réseau créant et maintenant (201) une table de correspondance d'une adresse de protocole Internet, IP, et d'un port de pont en fonction d'un message relatif à l'attribution d'adresse IP dynamique et d'informations du port de pont dans lequel entre un message de demande d'attribution d'adresse IP dynamique, ladite table de correspondance de l'adresse IP et du port de pont comprenant plusieurs éléments d'enregistrements de table de correspondance ;
b) ledit dispositif de réseau extrayant une demande ARP et interrogeant (202) ladite table de correspondance pour acquérir le port de pont en fonction d'une adresse IP de destination dans ladite demande ARP ; et
c) ledit dispositif de réseau effectuant la diffusion unique (203) de ladite demande ARP audit port de pont ;
**caractérisé en ce que** chaque enregistrement de table de correspondance dans ladite table de correspondance de l'adresse IP et du port de pont comprend une période de location et un horodatage, et le maintien dans l'étape a) se réfère à la synchronisation et la détection circulaire de chaque enregistrement de table de correspondance par le dispositif de réseau, si la période de location est égale à zéro et la différence entre l'heure actuelle et l'horodatage est supérieure à T, ou la période de location n'est pas égale à zéro mais la différence entre l'heure actuelle et l'horodatage est supérieure à la période de location, cet élément d'enregistrement est supprimé (405), et une valeur dudit T est une valeur de temps déterminée d'un instant où une session avec une adresse IP normalement attribuée lance une demande à un instant où la session reçoit une réponse en fonction de l'échelle de mise en réseau.

2. Procédé selon la revendication 1, dans lequel :
chaque enregistrement de table de correspondance comprend une adresse de contrôle d'accès au support MAC de l'utilisateur, une identification de réseau local virtuel, un numéro sériel de transmission de demande, une adresse IP d'utilisateur et le port de pont.

3. Procédé selon la revendication 1, dans lequel :
dans l'étape a), ledit message relatif à l'attribution d'adresse IP dynamique se réfère à un message DHCP ou PPPoE et, pour le mode DHCP, la création ou la mise à jour d'un enregistrement dans la table de correspondance de relation de correspondance entre l'adresse IP et le port de pont si le message relatif à l'attribution d'adresse IP dynamique est un message DISCOVER, REQUEST, OFFER ou ACK ; la suppression de l'enregistrement dans la table de correspondance de la relation de correspondance entre l'adresse IP et le port de pont si le message relatif à l'attribution d'adresse IP dynamique est un message RELEASE, DECLINE ou NAK.

4. Procédé selon la revendication 1, dans lequel :
dans un processus de détection circulaire des enregistrements dans la table de correspondance, si le nombre d'enregistrements détectés est supérieur à un temps de vieillissement fixé, le cycle de détection suivant est attendu.

5. Dispositif pour réaliser une limitation de diffusion de demandes de protocole de résolution d'adresses, ARP, le dispositif comprenant un module de réception et d'analyse, un module de maintien de table de correspondance, un module d'interrogation de table de correspondance et un module de transmission, dans lequel,
le module de réception et d'analyse est utilisé pour recevoir et analyser une demande ARP pour acquérir une adresse de protocole Internet, IP, de destination ;
le module de maintien de table de correspondance est utilisé pour créer et maintenir (201) une table de correspondance d'une adresse IP et d'un port de pont en fonction d'un message relatif à l'attribution d'adresse IP dynamique et d'informations du port de pont dans lequel entre un message de demande d'attribution d'adresse IP dynamique, et ladite table de correspondance de l'adresse IP et du port de pont comprend plusieurs éléments d'enregistrements de table de correspondance ;
le module d'interrogation de table de correspondance est utilisé pour interroger (202) la table de correspondance pour acquérir le port de pont en fonction d'une adresse IP de destination dans ladite demande ARP reçue par le module de réception et d'analyse ;
le module de transmission est utilisé pour effectuer la diffusion unique (203) de la demande ARP reçue par le module de réception et d'analyse au port de pont acquis ;
**caractérisé en ce que** chaque enregistrement de table de correspondance dans la table de correspondance de l'adresse IP et du port de pont comprend une période de location et un horodatage, et ledit module de maintien de table de correspondance est également utilisé pour la synchronisation et la détection circulaire de chaque enregistrement dans la table de correspondance pour réaliser un mécanisme de vieillissement : si la période de location est égale à zéro et la différence entre l'heure actuelle et l'horodatage est supérieure à T, ou la période de location n'est pas égale à zéro mais la différence entre l'heure actuelle et l'horodatage est supérieure à la période de location, cet enregistrement est supprimé (405), et une valeur dudit T est une valeur de temps déterminée d'un instant où une session avec une adresse IP normalement attribuée lance une demande à un instant où la session reçoit une réponse en fonction de l'échelle de mise en réseau.

6. Dispositif selon la revendication 5, dans lequel : ledit module de réception et d'analyse est également utilisé pour recevoir et analyser le message relatif à l'attribution d'adresse IP dynamique ; ledit module de transmission est également utilisé pour transmettre ledit message relatif à l'attribution d'adresse IP dynamique ; ledit module de maintien de table de correspondance est utilisé pour créer et maintenir la table de correspondance de l'adresse IP et du port de pont en fonction d'un résultat d'analyse du message relatif à l'attribution d'adresse IP dynamique.

7. Dispositif selon la revendication 5, dans lequel : ledit message relatif à l'attribution d'adresse IP dynamique se réfère à un message DHCP ou PPPoE et, pour le mode DHCP, ledit module de maintien de table de correspondance maintient la table de correspondance de la manière suivante : si le message relatif à l'attribution d'adresse IP dynamique est un message DISCOVER, REQUEST, OFFER ou ACK, un enregistrement dans la table de correspondance de relation de correspondance entre l'adresse IP et le port de pont est créé ou mis à jour ; si le message relatif à l'attribution d'adresse IP dynamique est un message RELEASE, DECLINE ou NAK, l'enregistrement dans la table de correspondance de la relation de correspondance entre l'adresse IP et le port de pont est supprimé.

8. Dispositif selon la revendication 5, dans lequel, dans un processus de détection circulaire des enregistrements dans la table de correspondance, si le nombre d'enregistrements détectés est supérieur à un temps de vieillissement fixé, le cycle de détection suivant est attendu.
